Europäisches Patentamt

European Patent Office

Office européen des brevets

(19)

(11) EP 0 613 319 B1

## (12) FASCICULE DE BREVET EUROPEEN

(45) Date de publication et mention
de la délivrance du brevet:
**29.04.1998 Bulletin 1998/18**

(51) Int Cl.⁶: **H04R 3/02**, H04M 9/08

(21) Numéro de dépôt: **94400369.8**

(22) Date de dépôt: **21.02.1994**

(54) **Dispositif multicapteurs de prise de son et de traitement du signal associé**

Mehrmikrofon-Schallaufnahmevorrichtung und dazugehörende Signalverarbeitungsvorrichtung

Multimicrophone sound pick-up device and associated signal processing device

(84) Etats contractants désignés:
**DE ES GB IT**

(30) Priorité: **23.02.1993 FR 9302054**

(43) Date de publication de la demande:
**31.08.1994 Bulletin 1994/35**

(73) Titulaire: **FRANCE TELECOM**
**75015 Paris (FR)**

(72) Inventeurs:
• **Le Tourneur, Grégoire**
**F-22700 St Quay Perros (FR)**
• **Gilloire, André**
**F-22300 Lannion (FR)**
• **Larvor, René**
**F-22300 Lannion (FR)**

(74) Mandataire: **Fort, Jacques et al**
**CABINET PLASSERAUD**
**84, rue d'Amsterdam**
**75440 Paris Cedex 09 (FR)**

(56) Documents cités:
**EP-A- 0 002 413**     **EP-A- 0 061 812**
**EP-A- 0 209 894**     **US-A- 3 922 488**
**US-A- 4 837 829**

## Description

La présente invention concerne les dispositifs multicapteurs de prise de son (ce dernier terme devant être interprété dans un sens large et comme incluant notamment la parole) et elle trouve une application particulièrement importante, bien que non-exclusive, dans le domaine des terminaux audio, tels que ceux constituant terminal de téléréunion, poste de communication de groupe, terminal de téléconférence, poste téléphonique main libre à plusieurs capteurs, visiophone à plusieurs capteurs, terminal multimédia et installation de sonorisation. Plusieurs capteurs sont notamment utilisés pour mieux prendre en compte un nombre quelconque de locuteurs utilisant le dispositif de prise de son.

Un problème qui se pose fréquemment dans les dispositifs multicapteurs de prise de son est l'élimination ou du moins l'atténuation de la contribution, au signal de sortie obtenu à partir des différents capteurs, des perturbations présentes dans les signaux individuels de sortie des capteurs et provoquées par une source ou plusieurs sources de bruit corrélées et localisées. En particulier beaucoup de terminaux de communication comportent d'une part plusieurs capteurs et d'autre part un ou plusieurs haut-parleurs restituant le son généré provenant d'un terminal éloigné similaire de sorte qu'apparaît un phénomène de couplage acoustique, qui est à l'origine du phénomène d'écho et de l'effet Larsen.

Le document US 3 922 488 décrit un bloc transducteur unique ayant deux microphones et un circuit de réduction de la réaction de l'un sur l'autre. Ce résultat est obtenu en combinant les signaux provenant des deux microphones, après déphasage et atténuation appropriée. Il y a sommation pour le signal utile, soustraction pour traiter le bruit. Un tel traducteur n'est utilisable que dans le cas d'un locuteur unique, placé face à l'ensemble des deux microphones.

Le document US-A-4 837 829 utilise des paires de microphones associées à des paires de haut-parleurs, avec des déphasages de 180°.

Le document EP 0 209 894 décrit une disposition destinée à limiter le couplage entre un microphone et un haut-parleur placé à proximité. Pour cela, le microphone (ou chaque microphone) est relié au haut-parleur correspondant par deux voies dont l'une comporte un déphaseur et un atténuateur.

Enfin, le document FR-A-91 12125, publié le 09/04/93, décrit un système symétrique, ayant des capteurs équidistants, permettant d'annuler les signaux parasites parvenant en phase et avec la même intensité sur chacun des capteurs.

La présente invention vise à fournir un dispositif de prise de son comportant plusieurs capteurs fixes placés dans une ambiance soumise à une perturbation acoustique provenant d'une ou plusieurs sources disposées à des emplacements connus, dispositif susceptible d'être mis en oeuvre chaque fois que l'emplacement ou les emplacements d'origine sont fixes de sorte que le bruit est assimilable, vu d'un quelconque des capteurs, à un bruit provenant d'une seule source fixe équivalente, pouvant être différente d'un capteur à un autre, ledit dispositif étant de constitution simple et aisément ajustable en cas de modification du nombre et/ou de l'emplacement des capteurs et/ou des sources.

Dans la pratique, ces conditions sont remplies dans la majeure partie des cas et ne constituent que des contraintes peu gênantes.

Dans ce but, l'invention propose notamment un dispositif suivant la revendication 1 ou la revendication 2.

Il est possible de constituer un dispositif suivant l'invention quelle que soit la répartition des capteurs et des emplacements d'origine.

Dans un cas simple, les capteurs et les emplacements d'origine d'un même bruit ont une disposition présentant une symétrie de révolution du même ordre autour d'un même point. Les moyens de traitement affectent encore le même coefficient de pondération à tous les capteurs.

Les moyens de traitement peuvent être prévus pour constituer un signal composite en phase par sommation des produits de signaux individuels par le cosinus du déphasage respectif et un signal composite en quadrature par sommation des produits des signaux individuels par le sinus du déphasage. Ces moyens peuvent comporter de plus un filtre de déphasage de $\pi/2$ sur le signal composite en quadrature et un élément de retard du signal composite en phase, de compensation de temps de groupe.

Le dispositif peut avoir une constitution purement analogique ou mettre en oeuvre des moyens numériques. Dans le second cas, le filtre de déphasage peut être un transformateur de Hilbert.

L'invention sera mieux comprise à la lecture de la description qui suit de modes particuliers de réalisation de l'invention, donnés à titre d'exemples non-limitatifs. La description se réfère aux dessins qui l'accompagnent, dans lesquels :

- la figure 1 montre schématiquement la répartition la plus régulière possible de N capteurs autour d'une source unique, constituée par un haut-parleur, utilisable par exemple dans une installation d'audio conférence ;
- la figure 2 est une représentation schématique partielle des moyens de traitement du signal, dans le cas d'une disposition du genre montré en figure 1 ;
- la figure 3 montre une disposition constituant une variante de celle de la figure 1 ;
- les figures 4 et 5 montrent des dispositions constituant des variantes de celle de la figure 1.

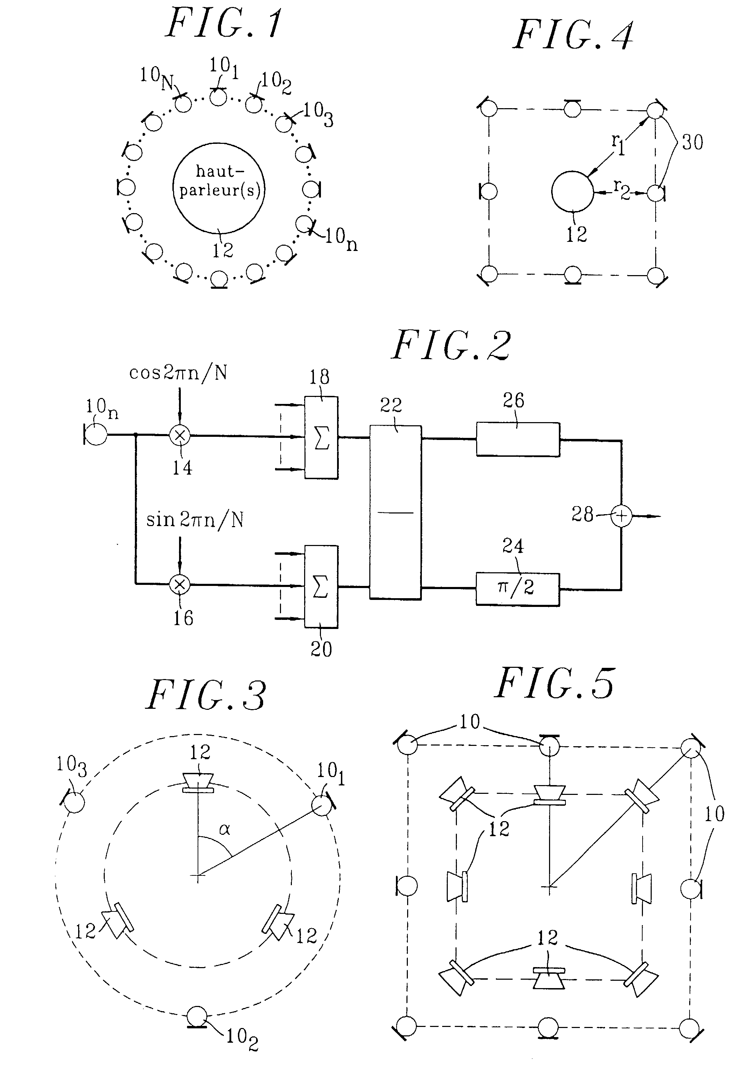

Dans le cas de la figure 1, la disposition est particulièrement simple, ayant N capteurs microphoniques $10_1$,... $10_n$..., $10_N$ régulièrement répartis autour d'une source perturbatrice unique 12 constituée par un haut-parleur, susceptible de donner lieu à un phénomène d'écho ou d'effet Larsen. Cette disposition se rencontre notamment dans un terminal d'audio conférence, où le haut-parleur restitue à la fois le signal de parole provenant de locuteurs éloignés et le signal d'écho dû à la restitution, par le haut-parleur 12, du son recueilli par les capteurs $10_1$ à $10_N$, diffusé par le haut-parleur du terminal éloigné et repris par les capteurs de ce terminal éloigné. Le haut-parleur 12 et les capteurs microphoniques sont fixes et le diagramme de sensibilité, vu du haut-parleur, est le même pour tous les capteurs, qui sont généralement des microphones omnidirectionnels ou unidirectionnels de même orientation.

Dans ce cas, les perturbations reçues par les capteurs sont identiques en amplitude et en phase. Si, de façon classique, les signaux de sortie des différents capteurs sont simplement additionnés, l'amplitude de la perturbation dans le signal provenant de l'addition est N fois la perturbation due à un seul capteur, d'où un risque plus important d'effet Larsen.

Dans ce cas la contribution de la perturbation au signal de sortie peut être annulée en déphasant régulièrement les signaux en provenance des différents capteurs avant sommation, c'est-à-dire en imposant un déphasage de $2\pi n/N$ au capteur d'ordre n (la numérotation des capteurs n'étant pas forcément l'ordre dans lequel ils sont disposés autour du haut-parleur 12).

Dans ce cas en effet, le signal composite S est donné par :

$$S = \sum_{n=1}^{N} [P_n \exp(2j\pi n/N)] \qquad (1)$$

où $P_n$ est le signal capté par le microphone d'ordre n, constitué par la somme d'un signal éventuel utile (beaucoup plus élevé pour le capteur placé en face du locuteur que pour les autres capteurs) et d'un signal perturbateur.

Le signal perturbateur étant le même pour tous les capteurs, on peut sortir sa contribution de la somme donnée par la formule (1), qui reste constituée uniquement par la somme de termes dont un est très prépondérant, de sorte que la modification subie par le signal utile est en général négligeable. Quant aux contributions du signal perturbateur, leur somme est nulle.

Les déphasages nécessaires de $2\pi\, n/N$ peuvent être obtenus par traitement séparé des composantes en phase et en quadrature (c'est-à-dire du signal directement fourni par les capteurs et du même signal déphasé de $\pi/2$). Pour le capteur d'ordre n :

$$S_n.\exp(2j\,\pi n/N) = S_n.\cos(2\pi n/N) + \overset{\wedge}{S}_n.\sin(2\pi n/N) \qquad (2)$$

où $\overset{\wedge}{S}_n$ désigne la composante en quadrature, qui peut être obtenue par passage du signal $S_n$ dans un filtre déphaseur pur de $\pi/2$.

Le signal composite S peut alors s'écrire, en tenant compte de ce que le déphasage de $\pi/2$ est une opération linéaire :

$$S = \sum_{n=1}^{N} [S_n.\cos(2\pi n/N)] + quadrature \sum_{n=1}^{N} [S_n.\sin(2\pi n/N)] \qquad (3)$$

La formule (3) montre qu'il est possible d'effectuer le déphasage de $\pi/2$ non pas sur chaque signal de sortie d'un microphone, mais sur la somme des signaux multipliés par les valeurs effectives de $\sin(2\pi n/N)$.

Les signaux de sortie des capteurs microphoniques peuvent en conséquence être appliqués à des moyens de traitement du genre montré en figure 2 (où un seul capteur, d'ordre n, est représenté). Le signal de sortie de chaque capteur est appliqué à deux branches contenant l'un un multiplicateur 14 par $\cos 2\pi\, n/N$, l'autre un multiplicateur 16 par $\sin 2\pi\, n/N$. Les signaux des N premières branches sont additionnés dans un sommateur 18. De même, les N signaux provenant des secondes branches sont additionnés dans un sommateur 20.

Dans le dispositif montré en figure 2, destiné à fournir un signal de sortie numérique échantillonné, les sommateurs 18 et 20 attaquent un convertisseur analogique-numérique double 22. Le signal numérisé provenant du sommateur 20 est ensuite déphasé de π/2 pour obtenir un signal en quadrature. Cette opération peut être effectuée par un filtre de Hilbert 24. Le signal numérisé correspondant à la première voie traverse simplement un circuit compensateur de temps de groupe pur 26.

Enfin les deux composantes ainsi obtenues sont appliquées à un additionneur numérique 28 qui fournit le signal de sortie, destiné par exemple à être transmis sur une ligne téléphonique.

La disposition montrée en figure 2 permet de n'utiliser qu'un seul convertisseur analogique-numérique double. Il serait également possible de numériser directement les signaux de sortie provenant des différents microphones et d'effectuer les multiplications en numérique. Il serait également possible d'effectuer l'ensemble des opérations de façon analogique, notamment lorsque le signal de sortie à transmettre doit être analogique.

Un tel dispositif peut fonctionner en bande téléphonique normale, avec une fréquence d'échantillonnage de 8 kHz, aussi bien qu'en bande élargie, à une fréquence de 16 kHz, ou en bande haute-fidélité.

Le dispositif peut également avoir une constitution entièrement analogique, avec une bande passante quelconque.

Le dispositif peut être prévu de façon à être ajustable, par exemple dans le cas où les capteurs sont munis d'interrupteurs permettant d'éliminer certains d'entre eux. Dans ce cas, il est nécessaire de disposer de générateurs de sinus et de cosinus permettant de fournir toutes les valeurs successives écartées de $2\pi/N$, où N peut prendre n'importe laquelle de plusieurs valeurs entre 2 et un nombre maximum, correspondant à la totalité des capteurs prévus.

Il n'est pas nécessaire que les capteurs 10, à $10_N$ soient régulièrement répartis angulairement, dans la mesure où ils sont à la même distance d'un haut-parleur central unique 12 et où les capteurs sont tels que la contribution sonore utile au signal de sortie provenant d'un locuteur soit nettement plus élevée pour un capteur que pour la majeure partie des autres.

La disposition montrée en figure 2 est également utilisable lorsque le haut-parleur 12 est remplacé par un groupe de haut-parleurs laissant subsister la symétrie de révolution ou encore lorsque les haut-parleurs et les capteurs sont dans une disposition telle que chaque capteur soit dans la même disposition par rapport au groupe de haut-parleurs, considéré dans son ensemble.

C'est encore le cas lorsque les capteurs 10 et les haut-parleurs 12, en nombre égal, sont chacun répartis autour d'un même point avec une symétrie de révolution du même ordre, même s'ils sont à des distances différentes du centre, comme le montre la figure 3 où α est quelconque.

Lorsque les capteurs ne sont pas tous à la même distance de l'emplacement de la source d'origine de la perturbation sonore (ou sont à des distances différentes des sources équivalentes respectives), il est nécessaire de remplacer la formule (1) par une formule faisant intervenir des coefficients de pondération. Lorsque par exemple huit capteurs 30 présentent la disposition montrée en figure 4 autour d'une source constituée par un haut-parleur omnidirectionnel unique 12, c'est-à-dire occupent les coins et les milieux des côtés d'un carré dont le centre est à l'emplacement du haut-parleur, des coefficients de pondération différents doivent être appliqués aux signaux de sortie des capteurs d'angle et des capteurs de côté. Ces coefficients sont choisis en fonction des distances $r_1$ et $r_2$, de façon que la résultante des contributions des microphones soit nulle pour la perturbation sonore provenant du haut-parleur 12. Les coefficients de pondération peuvent être calculés directement à partir de r, et r2 lorsque la loi d'affaiblissement en fonction de la distance est connue. Le cas de la figure 4 est directement extrapolable à toute disposition où les capteurs occupent les coins et les milieux d'un polygone régulier autre qu'un carré. Dans d'autres cas il est nécessaire de mesurer l'affaiblissement, par exemple en mesurant la pression acoustique engendrée par les haut-parleurs.

On aura encore deux coefficients de pondération différents, qui pourront être déterminés par le calcul ou par la mesure, dans une disposition telle que celle de la figure 5, comportant des haut-parleurs 12 en nombre égal à celui des capteurs et orientés chacun vers un capteur respectif 10, mais avec des distances différentes.

Dans ce cas, le dispositif montré en figure 2 sera complété par l'adjonction d'atténuateurs sur les première et seconde branches de traitement de signaux provenant de certains des capteurs, en amont des multiplicateurs.

Dans la pratique, l'invention sera d'autant plus facile à mettre en oeuvre que la disposition des microphones et celle des haut-parleurs seront comparables.

**Revendications**

1. Dispositif de prise de son comportant N capteurs fixes à des distances et/ou à des intervalles angulaires variables autour de l'emplacement d'une source de perturbation acoustique unique ou équivalente à l'ensemble de plusieurs sources, N étant un entier supérieur à 2, comprenant des moyens (14-26) de traitement des N signaux individuels provenant des différents capteurs, donnant auxdits signaux des déphasages et formant une somme pondérée des signaux déphasés, les déphasages et les coefficients de pondération étant tels que la contribution du bruit à la somme pondérée soit approximativement nulle.

2. Dispositif de prise de son comportant plusieurs capteurs fixes ($10_1$, ... $10_N$, ...$10_N$) placés dans une ambiance soumise à une perturbation acoustique provenant soit d'une source, soit de plusieurs sources qui sont disposées à des emplacements connus et sont assimilables, vues d'un quelconque des capteurs, à une seule source fixe (12) équivalente, pouvant être différente d'un capteur à l'autre, caractérisé en ce qu'il comprend des moyens (14-26) de traitement des signaux individuels provenant des différents capteurs, donnant auxdits signaux des déphasages et formant une somme pondérée des signaux déphasés, les déphasages et les coefficients de pondération étant tels que la contribution du bruit à la somme pondérée soit approximativement nulle, lesdits moyens de traitement constituant un premier signal composite, en phase, par sommation des produits des signaux individuels par le cosinus du déphasage respectif et un second signal composite, en quadrature, par sommation des produits des signaux individuels par le sinus du déphasage respectif, et en faisant la somme.

3.  Dispositif selon la revendication 2, caractérisé en ce que lesdits moyens comportent de plus un élément de compensation de temps de groupe (26) du signal composite en phase et un filtre (24) de déphasage de $\pi/2$ du signal composite en quadrature.

4.  Dispositif selon la revendication 2 ou 3, caractérisé en ce qu'il comporte des moyens (22) de conversion des signaux numériques échantillonnés.

5.  Dispositif selon les revendications 3 et 4, caractérisé en ce que le filtre de déphasage (24) est un transformateur de Hilbert.

6.  Dispositif selon l'une quelconque des revendications précédentes, caractérisé en ce que les capteurs ($10_1$, ..., $10_N$), au nombre de N, sont identiques et dans une disposition telle que tous les capteurs sont régulièrement répartis autour de l'emplacement d'une même source (12) équivalente et en ce que les moyens de traitement affectent le même coefficient de pondération à tous les capteurs.

7.  Dispositif selon l'une quelconque des revendications 1 à 5, caractérisé en ce que les capteurs (10) et les emplacements d'origine (12) des perturbations ont une disposition présentant une symétrie de révolution du même ordre autour d'un même point et en ce que les moyens de traitement affectent le même coefficient de pondération à tous les capteurs.

8.  Dispositif selon l'une quelconque des revendications 1 à 5, dont les capteurs sont à des distances différentes de l'emplacement de la source, caractérisé en ce que les moyens de traitement appliquent des coefficients de pondération qui sont fonction de la distance source-capteur aux signaux de sortie des différents capteurs.

9.  Dispositif selon la revendication 8, caractérisé en ce que les capteurs (30) sont disposés aux angles et au milieu des côtés d'un polygone régulier centré sur l'emplacement d'une même source équivalente (12) et en ce que les moyens de traitement appliquent deux coefficients de pondération différents aux signaux de sortie de façon que la résultante des contributions des capteurs soit nulle pour le bruit provenant de la source.

10. Dispositif selon l'une quelconque des revendications 1 à 5, dans lequel les sources (12) sont en nombre égal à celui des capteurs (10) et orientées chacune vers un capteur respectif (10), avec des distances différentes, caractérisé en ce que les moyens de traitement appliquent, aux signaux de sortie des capteurs, des coefficients de pondération différents et fonction de la distance à la source respective.

**Patentansprüche**

1.  Einrichtung zur Schallaufnahme mit N in variablen Entfernungen und/ oder mit variablen Winkelabständen um den Ort einer einzelnen akustischen Störquelle oder einer zur Gesamtheit mehrerer Quellen äquivalenten akustischen Störquelle fest angeordneten Aufnehmern, wobei N eine ganze Zahl größer als 2 ist, umfassend Mittel (14-26) zur Verarbeitung der von den verschiedenen Aufnehmern kommenden N Einzelsignale, wobei die Verarbeitungsmittel Phasenverschiebungen an diesen Signalen vornehmen und eine gewichtete Summe der phasenverschobenen Signale bilden, wobei die Phasenverschiebungen und die Wichtungskoeffizienten derart sind, daß der Rauschanteil an der gewichteten Summe annähernd null ist.

2.  Einrichtung zur Schallaufnahme mit mehreren Aufnehmern ($10_1$, ··· $10_n$,... $10_N$), die fest in einer Umgebung angeordnet sind, welche einer akustischen Störung ausgesetzt ist, die entweder von einer Quelle stammt oder von mehreren Quellen, welche an bekannten Orten angeordnet sind und - bei Betrachtung von einem der Aufnehmer aus - einer einzelnen, fest angeordneten äquivalenten Quelle (12) gleichsetzbar sind, die von einem Aufnehmer zum anderen unterschiedlich sein kann, dadurch gekennzeichnet, daß die Einrichtung Mittel (14-26) zur Verarbeitung der von den verschiedenen Aufnehmern kommenden Einzelsignale umfaßt, wobei die Verarbeitungsmittel Phasenverschiebungen an diesen Signalen vornehmen und eine gewichtete Summe der phasenverschobenen Signale bilden, wobei die Phasenverschiebungen und die Wichtungskoeffizienten derart sind, daß der Rauschanteil an der gewichteten Summe annähernd null ist, wobei die Verarbeitungsmittel durch Summation der Produkte der Einzelsignale mit dem Cosinus der jeweiligen Phasenverschiebung ein erstes zusammengesetztes In-Phase-Signal erzeugen und durch Summation der Produkte der Einzelsignale mit dem Sinus der jeweiligen Phasenverschiebung ein zweites zusammengesetztes Quadratur-Signal erzeugen und daraus die Summe bilden.

3. Einrichtung nach Anspruch 2, dadurch gekennzeichnet, daß die Mittel ferner ein Kompensationselement (26) für die Gruppenlaufzeit des zusammengesetzten In-Phase-Signals sowie ein Filter (24) zur Phasenverschiebung des zusammengesetzten Quadratur-Signals um $\pi/2$ umfassen.

4. Einrichtung nach Anspruch 2 oder 3, dadurch gekennzeichnet, daß sie Mittel (22) zur Umwandlung von digitalen Abtastsignalen umfaßt.

5. Einrichtung nach den Ansprüchen 3 und 4, dadurch gekennzeichnet, daß das Phasenverschiebungsfilter (24) ein Hilbert-Transformator ist.

6. Einrichtung nach einem der vorhergehenden Ansprüche, dadurch gekennzeichnet, daß die in einer Anzahl von N vorhandenen Aufnehmer ($10_1,... 10_N$) identisch sind und derart angeordnet sind, daß alle Aufnehmer gleichmäßig um den Ort ein und derselben äquivalenten Quelle (12) verteilt sind und daß die Verarbeitungsmittel jedem Aufnehmer den gleichen Wichtungskoeffizienten zuordnen.

7. Einrichtung nach einem der Ansprüche 1 bis 5, dadurch gekennzeichnet, daß die Aufnehmer (10) und die Ursprungsorte (12) der Störungen eine Anordnung mit einer Rotationssymmetrie gleicher Reihenfolge um ein und denselben Punkt besitzen und daß die Verarbeitungsmittel jedem Aufnehmer den gleichen Wichtungskoeffizienten zuordnen.

8. Einrichtung nach einem der Ansprüche 1 bis 5, deren Aufnehmer sich in unterschiedlichen Entfernungen vom Ort der Quelle befinden, dadurch gekennzeichnet, daß die Verarbeitungsmittel für die Ausgangssignale der verschiedenen Aufnehmer Wichtungskoeffizienten heranziehen, die eine Funktion der Entfernung Quelle-Aufnehmer sind.

9. Einrichtung nach Anspruch 8, dadurch gekennzeichnet, daß die Aufnehmer (30) in den Ecken und in der Mitte der Seiten eines um den Ort ein und derselben äquivalenten Quelle (12) zentrierten regelmäßigen Polygons angeordnet sind und daß die Verarbeitungsmittel zwei verschiedene Wichtungskoeffizienten für die Ausgangssignale heranziehen, so daß die Resultierende der Beiträge der Aufnehmer für das von der Quelle stammende Rauschen null ist.

10. Einrichtung nach einem der Ansprüche 1 bis 5, bei der die Quellen (12) in einer Anzahl gleich derjenigen der Aufnehmer (10) vorhanden sind und bei unterschiedlichen Entfernungen jeweils zu je einem Aufnehmer (10) hin orientiert sind, dadurch gekennzeichnet, daß die Verarbeitungsmittel für die Ausgangssignale der Aufnehmer unterschiedliche Wichtungskoeffizienten heranziehen, die eine Funktion der Entfernung von der jeweiligen Quelle sind.

**Claims**

1. Device for picking up sound comprising N stationary sensors at variable distances and/or angular intervals around a single source of acoustic disturbance or a source equivalent to a set of a plurality of sources, N being an integer higher than 2, comprising means (14-26) for processing the N individual signals originating from the different sensors, said means imparting phase shifts to said signals and forming a weighted sum of the phase-shifted signals, the phase shifts and the weighting coefficients being such that the contribution of the noise to the weighted sum is approximately zero.

2. Device for picking up sound comprising a plurality of stationary sensors ($10_1,.... 10_n,... 10_N$) located in an environment subjected to acoustic disturbance originating either from one source, or from a plurality of sources which are located at known locations and can be considered, as seen from any one of the sensors, to a single stationary equivalent source, which can be different from a sensor to a next one characterized in that it comprises means (14-26) from processing the individual signals coming from the different sensors, imparting phase shifts to said signals and forming a weighted sum of the phase shifted signals, the phase shifts and the weighting coefficients being such that the contribution of noise to the weighted sum is approximatively zero, said processing means constructing a first composite signal which is in phase by summing the products of the individual signals by the cosine of the respective phase shift and a second composite signal, which is in quadrature, by summing the products of individual signals by the sine of the respective phase shift, and carrying out summation.

3. Device according to claim 2, characterized in that said means further comprise an element for compensating the group time (26) of the in-phase composite signal and a filter (24) for causing a $\pi/2$ phase shift of the quadrature composite signal.

4. Device according to claim 2 or 3, characterized in that it comprises means (22) for converting sampled digital signals.

5. Device according to claims 3 and 4, characterized in that the phase shift filter (24)is a Hilbert transformer.

6. Device according to any one of the preceeding claims characterized in that the sensors ($10_1$,.... $10_N$)are N in number, identical and in an arrangement such that all sensors are regularly distributed about the location of a same equivalent source (12) and in that the processing means apply the same weighting coefficient to all of the sensors.

7. Device according to any one of claims 1-5, characterized in that the sensors (10) and the locations (12) of the origins of the disturbances are in an arrangement having a rotational symetry of the same order about a same point and in that the processing means apply the same weighting coefficients to all sensors.

8. Device according to any one of claims 1-5, wherein the sensors are at different distances from the location of the source, characterized in that the processing means apply weighting coefficients to the output signals of the different sensors which are in relation with the source-sensor distance.

9. Device according to claim 8, characterized in that the sensors (30) are located at the corners and in the middles of the sides of a regular polygone centered on the location of a same equivalent source (12) and in that the processing means apply two different weighting coefficients to the output signals whereby the resultant of the contribution of the sensors is zero for the noise originating from the source.

10. Device according to any one of claims 1-5, wherein the number of sources (12) is the same as the number of sensors (10) and the sources are each angularly directed towards a respective sensor (10) with different distances, characterized in that the processing means apply, to the output signals of the sensors, weighting coefficients which are different and responsive to the distance to the respective source.

## FIG.1

## FIG.4

## FIG.2

$\cos 2\pi n/N$

$\sin 2\pi n/N$

$\pi/2$

## FIG.3

## FIG.5